# EUROPÄISCHE PATENTSCHRIFT

(11) **EP 0 985 113 B1**
(45) Veröffentlichungstag und Bekanntmachung des Hinweises auf die Patenterteilung: **19.12.2001**
(21) Anmeldenummer: 98933452.9
(22) Anmeldetag: 28.04.1998
(51) Int. Cl.: F16L 13/14, F16J 15/06

(54) **PRESSFITTING ZUR HERSTELLUNG EINER UNLÖSBAREN VERBINDUNG VON ROHREN**
PRESS-FITTING FOR NON REMOVABLE TUBE COUPLING
EMMANCHEMENT A LA PRESSE POUR LA FABRICATION D'UN RACCORD DE TUBES NON DETACHABLE

(30) Priorität: 27.05.1997 DE 19722935
(43) Veröffentlichungstag der Anmeldung: 15.03.2000
(73) Patentinhaber: Mapress GmbH & Co. KG, 40764 Langenfeld (DE)
(72) Erfinder: FOERING, Herbert, D-42697 Solingen (DE); FRANZEN, Rainer, D-47802 Krefeld (DE); GIGOWSKI, Thomas, D-41517 Grevenbroich (DE)
(74) Vertreter: Meissner, Peter E., Dipl.-Ing.
(86) Internationale Anmeldenummer: DE9801248
(87) Internationale Veröffentlichungsnummer: WO9854500

(56) Entgegenhaltungen:
- DE-A- 2 935 085
- DE-A- 19 544 161

## Beschreibung

Die Erfindung betrifft einen Preßfitting zur Herstellung einer unlösbaren dichten Verbindung von glattendigen Rohren gemäß dem Oberbegriff des Patentanspruches 1.

Die Herstellung einer unlösbaren dichten Verbindung von glattendigen Rohren mit einem die glattendigen Rohrenden umfassenden Fitting, dessen wulstförmig ausgebildete Enden je einen Dichtring aufnehmen, wobei mittels einer mit einer Betätigungsvorrichtung verbundenen auswechselbaren Haltevorrichtung mit gelenkig angeordneten Backen, das wulstförmig ausgebildete Ende und gleichzeitig der benachbart zylindrische Bereich des Fittings zusammen mit dem Rohr plastisch und der eingeschlossene Dichtring elastisch verformt werden, ist bekannt (siehe Prospekt Mannesmann Preßfitting GmbH, Ausgabe 8/1994). Die Dichtfunktion der Verbindung wird dadurch erreicht, daß durch plastische Verformung des wulstartig ausgebildeten Endes des Preßfittings der Dichtring elastisch verformt wird und über einen bestimmten Teil des Querschnittsumfanges linienförmig an den ihn umgebenden Oberflächenbereichen des wulstartig ausgebildeten Endes des Fittings und des Rohres zur Anlage kommt. Zur Aufnahme der bei entsprechendem Innendruck auftretenden Längskräfte wird der dem wulstförmig ausgebildeten Ende benachbarte zylindrische Bereich des Fittings zusammen mit dem Rohr plastisch verformt. Bei der Verpressung werden sowohl das wulstförmig ausgebildete Ende, als auch der benachbart zylindrische Bereich mittels der Betätigungsvorrichtung gleichzeitig verformt.

Im Regelfall führt bei der nach der Installation vorgeschriebenen Druckprobe eine nichtverpreßte Verbindungsstelle zu einer feststellbaren Leckage. In Sonderfällen kann es aber vorkommen, daß die Toleranzpaarung von Rohr und Fitting so ungünstig ist, daß der Dichtring schon beim Einschieben des glattendigen Rohres eine, wenn auch nur geringe Vorverformung erfährt, die aber ausreicht, um der Druckprobe bei der Abnahme der Installation standzuhalten. Im späteren Betrieb atmet aber die Leitung, d. h. schnellschaltende Ventile führen zu Druckstößen, es kann je nach Erwärmung zu Relativbewegungen kommen, so daß bei fehlender axialer Sicherung infolge der Nichtverpressung die zuvor sich ergebende geringe Vorverformung des Dichtringes nicht ausreicht, um die Dichtheit der Verbindungsstelle weiterhin zu gewährleisten.

Aufgabe der Erfindung ist es, einen Preßfitting zur Herstellung einer unlösbaren dichten Verbindung von glattendigen Rohren anzugeben, mit dem auch bei ungünstiger Toleranzpaarung von Rohr und Fitting eine nichtverpreßte Stelle als undicht delektiert wird.

Diese Aufgabe wird ausgehend vom Oberbegriff des Patentanspruches 1 mit den im kennzeichnenden Teil angegebenen Merkmalen gelöst. Vorteilhafte Weiterbildungen sind Bestandteil von Unteransprüchen.

Erfindungsgemäß weist das Dichtelement mindestens einen in Umlaufrichtung liegenden Abschnitt auf, der mit einem vom Ausgangsquerschnitt abweichenden Querschnitt in Form einer sich über den Umlauf und über die Querschnittsebene erstreckenden Ausbauchung und einer dem eingeschobenen Rohr zugewandten radial in den Querschnitt des Dichtelementes sich erstreckenden Ausnehmung versehen ist. Damit nach der Verpressung die Ausnehmung voll ausgefüllt ist, ist das Volumen der Ausbauchung im Vergleich zum Ausgangsquerschnitt mindestens so groß, wie das zum Ausgangsquerschnitt fehlende Volumen der Ausnehmung. Vor der Verpressung bildet im Querschnitt gesehen die Ausnehmung des Dichtelementes eine Durchgangsöffnung in axialer Richtung. Vorzugsweise ist das Dichtelement als Torus mit einem Kreisquerschnitt ausgebildet. Damit es bei der Verpressung und dem Verschieben des Volumens der Ausbauchung in das Lückenvolumen der Ausnehmung nicht zu unerwünschten Fältelungen und Verquetschungen des Dichtelementes kommt, geht der Abschnitt mit dem abweichenden Querschnitt über eine vorgegebene Umlauferstreckung nach beiden Richtungen hin kontinuierlich ohne Sprungstelle in den Ausgangsquerschnitt über.

Vorzugsweise weist das Dichtelement drei symmetrisch über den Umlauf verteilt angeordnete Abschnitte mit einem vom Ausgangsquerschnitt abweichenden Querschnitt auf. Im Querschnitt gesehen ist der genannte Abschnitt birnenförmig, wobei im Übergangsbereich die Bimenform sich immer mehr der Kreisform annähert und die untenliegende Abflachung immer geringer wird. Die vorgeschlagene Ausbildung des Dichtelementes hat den Vorteil, daß auch bei extremer Toleranzpaarung von Rohr und Fitting die geringe Vorverformung des Dichtelementes nicht ausreicht, um die gezielt angeordneten Ausnehmungen dichtend zuzudrücken. Dies bedeutet, daß eine nichtverpreßte Verbindung mit einem solchen Dichtelement bei der Druckprobe zwingend zu einer Leckage führt. Eine solche Verbindungsstelle kann dann nachgepreßt und die Druckprobe wiederholt werden. Durch die Bimenform ist sichergestellt, daß das in der Ausnehmung fehlende Volumen durch das Beidrücken der Ausbauchung vollständig wieder ausgefüllt wird und das Dichtelement auf der Kontaktfläche zum Rohr dichtend zur Anlage kommt und die Vorspannung so groß gewählt ist, daß auch nach längerer Betriebsdauer die Dichtheit erhalten bleibt.

In der Zeichnung wird anhand eines Ausführungsbeispieles die erfindungsgemäße Ausbildung des Dichtelementes näher erläutert Es zeigen:
- Figur 1: einen Längsschnitt durch eine verpreßte Verbindung
- Figur 2: im Längsschnitt eine andere Ausführungsform vor der Verpressung
- Figur 3: in Vorderansicht ein erfindungsgemäß ausgebildetes Dichtelement
- Figur 4: einen Schnitt A-B in Figur 3
- Figur 5: eine Ansicht Z in Figur 4
- Figur 6: eine Ansicht Y in Figur 5
- Figur 7a - c: verschiedene Schnitte gemäß Figur 6 für 0°, 10° und 20° Umlauferstreckung

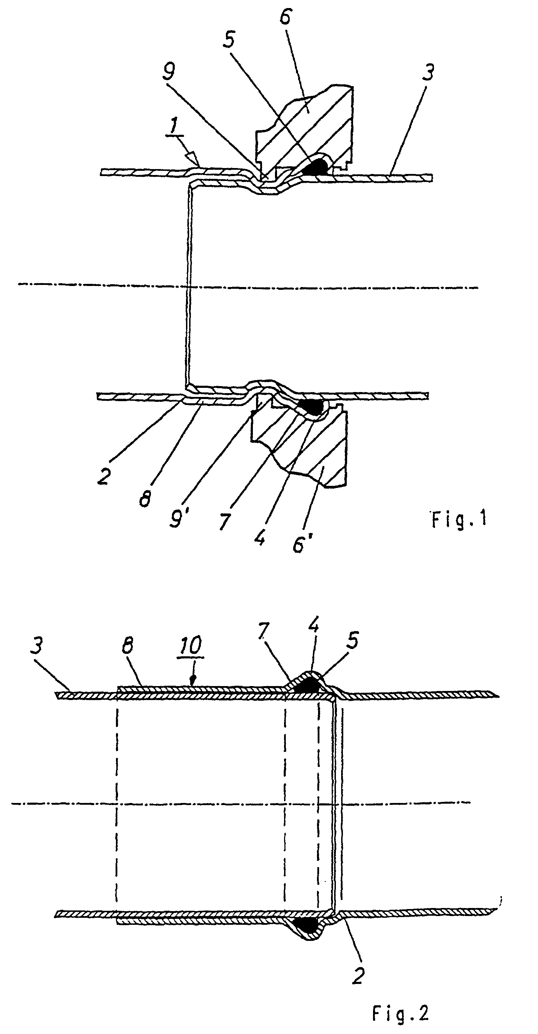

Figur 1 zeigt in einem Längsschnitt eine verpreßte Verbindung. Der Preßfitting 1 weist einen Anschlag 2 auf, bis zu dem das Rohr 3 eingeschoben werden muß, um eine einwandfreie Verpressung zu gewährleisten. Im wulstartig ausgebildeten Bereich 4 des Preßfittings 1 ist ein Dichtelement 5, hier in Form eines Dichtringes angeordnet.

Dieses ist durch die angesetzten Preßbacken 6, 6' elastisch verformt und füllt den gesamten durch den wulstartig ausgebildeten Bereich 4 gebildeten Kammerraum aus. Der wulstartige Bereich 4 geht über einen schräg verlaufenden Bereich 7 über in einen zylindrischen Bereich 8. In diesem zylindrischen Bereich 8 wird der Preßfitting 1 durch die Preßstege 9, 9' der Preßbacken 6, 6' plastisch verformt, ebenso auch der darunterliegende Bereich des eingeschobenen Rohres 3. Die Kontur dieses Preßsteges 9, 9' in Umfangsrichtung gesehen kann hexagonal, quadratisch oder zitronenförmig sein.

Einen anderen Preßfittingtyp zeigt Figur 2, wobei für gleiche Teile gleiche Bezugszeichen verwendet worden sind. Der Preßfitting 10 ist insofern anders gestaltet, da er auf der offenen Seite ebenfalls einen schrägverlaufenden Bereich 7 aufweist, der dann abgerundet in den zylindrischen Bereich 8 übergeht, wobei im Unterschied zur in Figur 1 dargestellten Ausführungsform der zylindrische Bereich 8 in Einschubrichtung gesehen vor dem Dichtelement 5 und nicht nach dem Dichtelement 5 angeordnet ist.

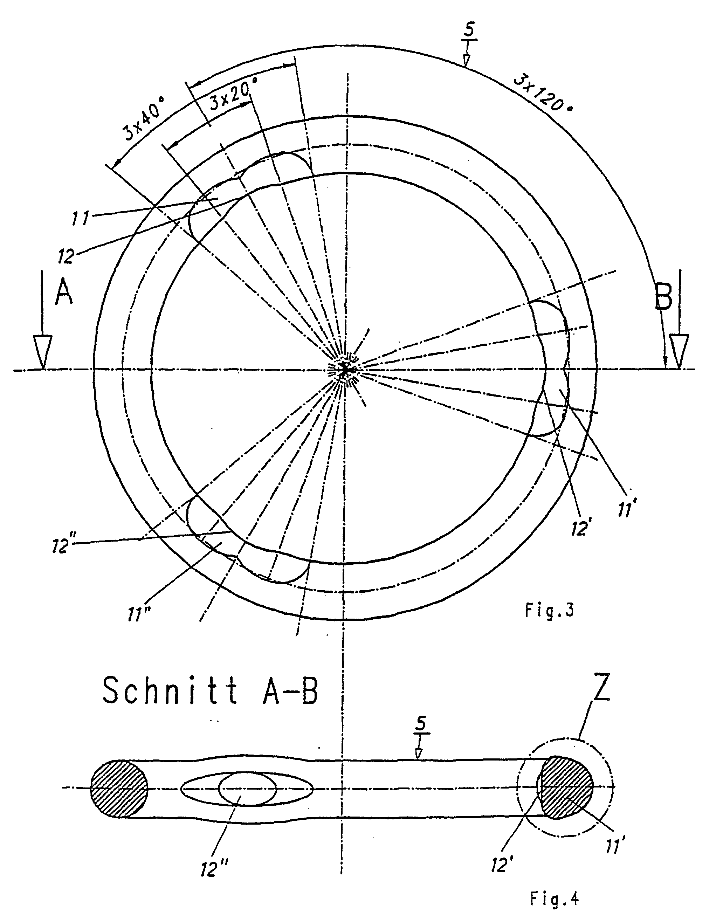

Eine erste Ausführungsform eines erfindungsgemäß ausgebildeten Dichtelementes 5 zeigt in einer Vorderansicht Figur 3. In diesem Ausführungsbeispiel ist das Dichtelement 5 mit drei symmetrisch über den Umlauf verteilt angeordneten Abschnitten 11, 11', 11" versehen, die wie in Figur 4 zu sehen ist, eine von der Kreisform abweichende Ausbauchung aufweisen. Die genannten Abschnitte 11, 11', 11" sind aber auch dadurch charakterisiert, daß sie eine dem eingeschobenen Rohr 3 (Fig. 1,2) zugewandte, radial in den Querschnitt des Dichtelementes 5 sich erstreckende linsenförmig ausgebildete Ausnehmung 12, 12', 12" aufweisen. Die linsenförmige Form ist in Figur 4 deutlich zu erkennen. Einzelheiten dazu sind in den nachfolgenden Figuren erläutert. Die mit einem abweichenden Querschnitt versehenen Abschnitte 11, 11', 11" erstrecken sich in diesem Ausführungsbeispiel über einen Umlauf von jeweils 40°, wobei die Ausnehmung 12, 12', 12" sich nur über einen hälftigen Umlauf von jeweils 20° erstreckt.

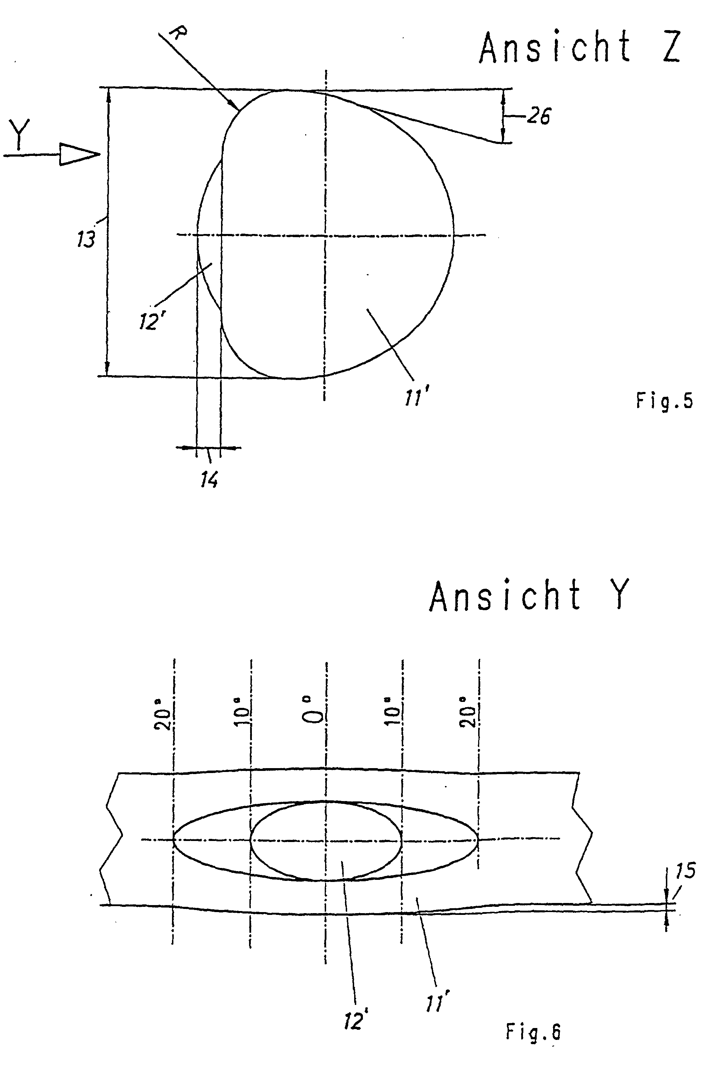

Figur 5 zeigt, daß der hier genau in der Mitte des Abschnittes 11' liegende Querschnitt birnenförmig ist, wobei die äußere Kontur abwechselnd gekrümmt und gerade ist. Ein wesentliches Charakteristikum dieses Querschnittes ist die Ausbauchung, die an der Umlaufstelle bei 0° ihre größte Erstreckung 13 hat. Weiterhin ist noch von Bedeutung die Tiefe 14 der Ausnehmung 12', wobei die Verhältnisse so gewählt sind, daß das durch die Ausnehmung 12' fehlende Volumen in bezug auf den idealen Kreisquerschnitt mindestens ersetzt wird durch das durch die Ausbauchung sich ergebende Volumen. Die Veränderung der Ausbauchung in Umlaufrichtung ist in Fig. 6 dargestellt. Der Sprung vom Größtmaß an der Umlaufstelle 0° bis zum Kleinstmaß an der Umlaufstelle> 20° ist durch das Erstreckungsmaß 15 charakterisiert

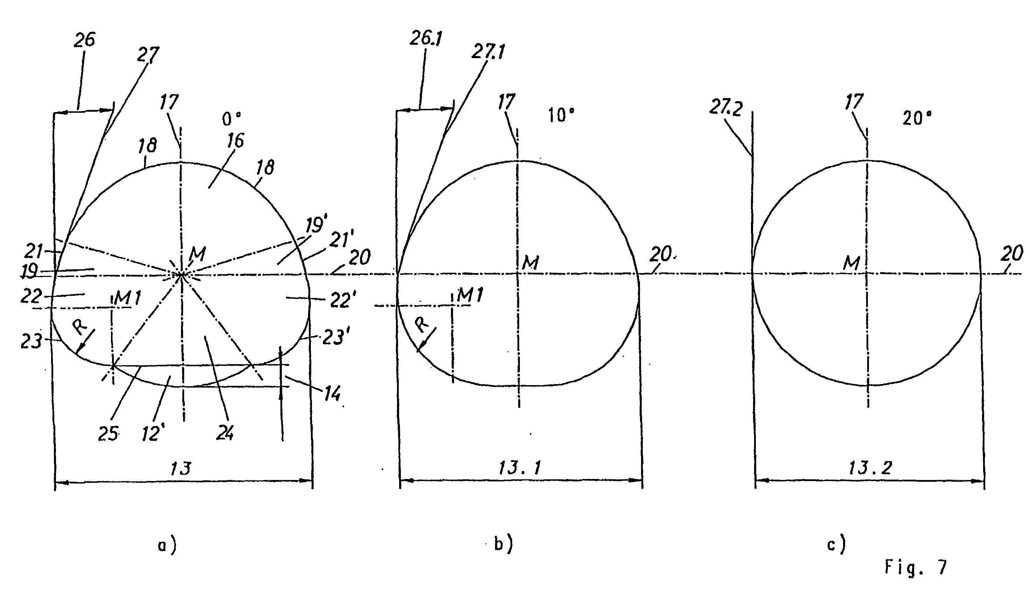

Figur 7 zeigt für einen beliebigen Abschnitt 11' die Einzelheiten des Querschnittes in drei ausgewählten Schnitten gemäß Figur 6. Der bei 0° liegende Querschnitt (Teilbild a), d. h. die Mitte des Abschnittes 11', ist durch einen ersten Sektor 16 charakterisiert, der sich symmetrisch von der senkrechten Mittelachse 17 aus nach beiden Seiten hin erstreckt. Die äußere Kontur 18 dieses Sektors 16 ist kreisförmig, dessen Mittelpunkt identisch ist mit dem Mittelpunkt M des Dichtelementes. An diesen Sektor 16 schließt sich rechts und links je ein weiterer Sektor 19, 19' an, der in diesem Ausführungsbeispiel nahezu an der horizontal verlaufenden Mittelachse 20 endet. Je nach Ausgestaltung kann das Ende der umfangmäßigen Erstreckung dieses Sektors 19, 19' aber auch ober- oder unterhalb der horizontal verlaufenden Mittelachse 20 liegen. Die äußere Kontur 21, 21' dieses Sektors 19, 19' ist geradlinig. Unterhalb der horizontal verlaufenden Mittelachse 20 folgen zwei Sektoren 22, 22' mit einer äußeren Kontur 23, 23', die kreisringförmig ist. Der Mittelpunkt M1 liegt zweifach exzentrisch zum Mittelpunkt M des Dichtelementes innerhalb des Sektors 22 bzw. 22'. Den unteren Abschluß bildet ein symmetrisch zur senkrechten Mittelachse 17 liegender Sektor 24, der eine gerade Kontur 25 aufweist. Zu erwähnen ist noch, daß die gerade Kontur 25 des unteren Sektors 24 und die gerade Kontur 21, 21' der beiden oberhalb der horizontalen Mittelachse 20 liegenden Sektoren 19, 19' Tangenten sind zur kreisförmigen Kontur 23 der beiden unterhalb der horizontalen Mittelachse 20 liegenden Sektoren 22, 22'. Das Maß der Ausbauchung 13 wird im wesentlichen bestimmt durch die Tiefe 14 der Ausnehmung 12' und durch den Grad 26 der Schräge 27 der genannten Kontur 21, 21' der beiden oberhalb der horizontal liegenden Mittelachse 20 liegenden Sektoren 19, 19'.

Teilbild b zeigt den Übergang zum Kreisquerschnitt gemäß Teilbild c. Zum einen wird der Grad der Ausbauchung 13.1 verringert, bis er den Durchmesser 13.2 des Kreisquerschnittes erreicht hat. Zum anderen wird der Grad 26.1 der Schräge 27.1 so lange reduziert, bis er die senkrecht auf der horizontal liegenden Mittelachse 20 stehende Tangente 27.2 des Kreisquerschnittes bildet.

## Patentansprüche

1. Preßfitting zur Herstellung einer unlösbaren dichten Verbindung von glattendigen Rohren, der mindestens einen ein torusförmiges Dichtelement aufnehmenden Abschnitt und einen daran anschließenden zylindrisch ausgebildeten, in Längsrichtung sich erstreckenden Bereich aufweist, sowie mit einem als Anschlag für das ein- bzw. aufschiebbare Rohr wirkenden Absatz versehen ist,
**dadurch gekennzeichnet,**
**daß** das Dichtelement mindestens einen in Umlaufrichtung liegenden Abschnitt (11,11',11") aufweist, der mit einem vom Ausgangsquerschnitt abweichenden Querschnitt in Form einer sich über den Umlauf und in der Querschnittsebene erstreckenden Ausbauchung (13) und einer dem eingeschobenen Rohr (3) zugewandten radial in den Querschnitt des Dichtelementes sich erstreckenden Ausnehmung (12,12',12") versehen ist, wobei das Volumen der Ausbauchung (13) im Vergleich zum Ausgangsquerschnitt mindestens so groß ist, wie das zum Ausgangsquerschnitt fehlende Volumen der Ausnehmung (12,12',12") und vor der Verpressung im Querschnitt gesehen die Ausnehmung (12,12',12") des Dichtelementes eine Durchgangsöffnung in axialer Richtung bildet.

2. Preßfitting nach Anspruch 1,
**dadurch gekennzeichnet,**
**daß** das Dichtelement (5) als Torus mit einem Kreisquerschnitt ausgebildet ist.

3. Preßfitting nach Anspruch 1,
**dadurch gekennzeichnet,**
**daß** das Dichtelement (5) drei symmetrisch über den Umlauf verteilt angeordnete Abschnitte (11,11',11") mit einem abweichenden Querschnitt aufweist.

4. Preßfitting nach den Ansprüchen 1 - 3,
**dadurch gekennzeichnet,**
**daß** der Abschnitt (11,11',11") mit dem abweichenden Querschnitt über eine vorgegebene Umlauferstreckung nach beiden Richtungen hin kontinuierlich ohne Sprungstelle in den Ausgangsquerschnitt übergeht.

5. Preßfitting nach den Ansprüchen 1 - 4,
**dadurch gekennzeichnet,**
**daß** die Ausnehmung (12,12',12") sich über einen Umlauf von 20° und der gesamte Abschnitt (11,11',11") sich über einen Umlauf von 40° erstreckt.

6. Preßfitting nach einem der Ansprüche 1 - 5,
**dadurch gekennzeichnet,**
**daß** der abweichende Querschnitt bimenförmig ist mit einem oberhalb der horizontalen Mittelachse (20) und symmetrisch zur senkrechten Mittelachse (17) sich erstreckenden Sektor (16) mit einer Kreiskontur (18), deren Mittelpunkt gleich ist dem Mittelpunkt (M) des Dichtelementes (5) und sich an diesen Sektor (16) rechts und links je ein etwa bis zur horizontalen Mittelachse (20) sich erstreckender weiterer Sektor (19,19') anschließt mit einer unter einem Winkel (26) verlaufenden geraden Kontur (21) und der unterhalb der horizontalen Mittelachse (20) liegende Teil des Dichtelementes (5) gebildet wird aus zwei symmetrisch zur senkrechten Mittelachse (17) liegenden Sektoren (22,22') mit einer Kreiskontur, deren Mittelpunkt (M1) zweifach versetzt zum Mittelpunkt (M) des Dichtelementes (5) innerhalb des jeweiligen Sektors (22,22') liegt und ein symmetrisch zur senkrechten Mittelachse (17) liegender Sektor (24) mit einer geraden Kontur (25) den unteren Abschluß bildet, wobei die gerade Kontur (25) des letztgenannten Sektors (24) und die gerade Kontur (21,21') der beiden oberhalb der horizontalen Mittelachse (20) liegenden Sektoren (19,19') Tangenten zur Kreiskontur (23,23') der beiden unterhalb der horizontalen Mittelachse (20) liegenden Sektoren (22,22') bilden.

7. Preßfitting nach einem der Ansprüche 1 - 6
**dadurch gekennzeichnet,**
**daß** die Erstreckung der unterhalb der horizontal liegenden Mittelachse (20) symmetrisch liegenden Ausbauchung (13) des einen abweichenden Querschnitt aufweisenden Abschnittes (11,11',11") sowie die Tiefe (14) der Ausnehmung (12,12',12") im Übergangsbereich kontinuierlich verkleinert wird und die schräg verlaufende gerade Kontur (21,21') der beiden oberhalb der horizontal liegenden Mittelachse (20) liegenden Sektoren (19,19') immer steiler verläuft, bis die Schräge (27.2) eine Tangente zum Kreisquerschnitt bildet.

## Claims

1. Press fitting for producing a non-removable sealed connection of smoothend pipes, which fitting has at least one portion, which receives a toroidal sealing element, and a region which abuts on said portion, is configured cylindrically and extends in the longitudinal direction, and also is provided with a shoulder which operates as a limit stop for the slide-in or slide-on pipe,
**characterised in that**
the sealing element has at least one portion (11, 11', 11") situated in the circumferential direction which portion is provided with a cross-section, which deviates from the initial cross-section, in the form of a bulge (13), which extends across the circumference and in the cross-sectional plane, and with a recess (12, 12', 12"), which is orientated towards the inserted pipe (3) and extends radially in the cross-section of the sealing element, the volume of the bulge (13) being at least as large, in comparison to the initial cross-section, as the volume of the recess (12, 12', 12"), which is missing from the initial cross-section and, as observed in cross-section before compression, the recess (12, 12', 12") of the sealing element forming a through-opening in the axial direction.

2. Press fitting according to claim 1,
**characterised in that**
the sealing element (5) is configured as a toroid with a circular cross-section.

3. Press fitting according to claim 1,
**characterised in that**
the sealing element (5) has three portions (11, 11', 11") which are disposed symmetrically distributed across the circumference and have a varying cross-section.

4. Press fitting according to claims 1 - 3,
**characterised in that**
the portion (11, 11', 11") with the varying cross-section changes across a prescribed circumferential extension in both directions in a continuous manner without a jump into the initial cross-section.

5. Press fitting according to claims 1 - 4,
**characterised in that**
the recess (12, 12', 12') extends over a circumference of 20 ° and the total portion (11, 11', 11') extends over a circumference of 40 °.

6. Press fitting according to one of the claims 1 - 5,
**characterised in that**
the varying cross-section is pear-shaped, having a sector (16) with a circular contour (18), which sector extends above the horizontal central axis (20) and symmetrically relative to the vertical central axis (17), the central point of which sector is equal to the central point (M) of the sealing element (5) and on this sector (16) to the right and the left there abuts a further sector (19, 19) respectively, which extends approximately up to the horizontal central axis (20) and has a straight contour (21), which extends at an angle (26), and the part of the sealing element (5), which is situated beneath the horizontal central axis (20), is formed from two sectors (22, 22) which are situated symmetrically relative to the vertical central axis (17) and have a circular contour, the central point (M1) of which sectors are situated offset twofold relative to the central point (M) of the sealing element (5) within the respective sector (22, 22') and a sector (24) which is situated symmetrically relative to the vertical central axis (17) and has a straight contour (25) forms the lower end, the straight contour (25) of the just-mentioned sector (24) and the straight contour (21, 21') of both sectors (19, 19') which are situated above the horizontal central axis (20) forming tangents to the circular contour (23, 23) of both sectors (22, 22) which are situated beneath the horizontal central axis (20).

7. Press fitting according to one of the claims 1 - 6,
**characterised in that** the extension of the bulge (13) of the portion (11, 11', 11"), which has a varying cross-section, said bulge being situated symmetrically beneath the horizontally situated central axis (20), and also the depth (14) of the recess (12, 12', 12') are reduced continuously in the transition region and the diagonally extending straight contour (21, 21') of both sectors (19, 19), which are situated above the horizontally situated central axis (20), extends more and more steeply until the inclination (27.2) forms a tangent to the circular cross-section.

## Revendications

1. Emmanchement à force pour réaliser une liaison étanche inamovible de tubes à extrémité lisse, qui présente au moins un tronçon recevant un élément d'étanchéité torique et une zone s'y raccordant, réalisée de façon cylindrique, s'étendant en direction longitudinale, et qui est muni d'une pièce agissant comme butée pour le tube pouvant être mis en place,
**caractérisé en ce que** l'élément d'étanchéité présente au moins un tronçon s'étendant en direction périphérique (11, 11', 11"), qui présente une section transversale s'écartant de la section transversale initiale sous forme d'un bombement (13) s'étendant sur la périphérie et dans le plan de la section transversale et d'un évidement (12, 12', 12") s'étendant radialement dans la section transversale de l'élément d'étanchéité, en regard du tube introduit (3), le volume du bombement (13) par rapport à la section transversale initiale étant au moins égal au volume, manquant par rapport à la section transversale initiale, de l'évidement (12, 12', 12") et, avant le pressage, en section transversale, l'évidement (12, 12', 12") de l'élément d'étanchéité formant une ouverture de passage en direction axiale.

2. Emmanchement à force selon la revendication 1,
**caractérisé en ce que** l'élément d'étanchéité (5) est réalisé comme tore ayant une section transversale circulaire.

3. Emmanchement à force selon la revendication 1,
**caractérisé en ce que** l'élément d'étanchéité (5) présente trois tronçons (11, 11', 11") agencés de façon symétriquement répartie sur la périphérie avec une section transversale différente.

4. Emmanchement à force selon les revendications 1 - 3,
**caractérisé en ce que** le tronçon (11, 11', 11") avec la section transversale différente se transforme en section transversale initiale par l'intermédiaire d'une étendue périphérique prédéfinie dans les deux sens de façon continue sans saut.

5. Emmanchement à force selon les revendications 1 - 4,
**caractérisé en ce que** l'évidement (12, 12', 12") s'étend sur 20° et le tronçon total (11, 11', 11") s'étend sur 40°.

6. Emmanchement à force selon une des revendications 1 - 5,
**caractérisé en ce que** la section transversale différente est piriforme avec un secteur (16), s'étendant au-dessus de l'axe central horizontal (20) et symétriquement par rapport à l'axe central vertical (17), ayant un contour circulaire (18) dont le centre est identique au centre (M) de l'élément d'étanchéité (5) et, à ce secteur (16), à droite et à gauche, se raccorde un autre secteur (19, 19'), s'étendant sensiblement jusqu'à l'axe central horizontal (20), ayant un contour rectiligne (21) s'étendant sous un angle (26), et la partie, se trouvant au-dessous de l'axe central horizontal (20), de l'élément d'étanchéité (5) est formée de deux secteurs (22, 22'), symétriques par rapport à l'axe central vertical (17), ayant un contour circulaire, dont le centre (M1), décalé deux fois par rapport au centre (M) de l'élément d'étanchéité (5), se trouve à l'intérieur du secteur respectif (22, 22'), et un secteur (24), symétrique par rapport à l'axe central vertical (17), ayant un contour rectiligne (25) forme la fermeture inférieure, le contour rectiligne (25) du secteur (24) cité en dernier et le contour rectiligne (21, 21') des deux secteurs (19, 19') se trouvant au-dessus de l'axe central horizontal (20) formant des tangentes par rapport au contour circulaire (23, 23') des deux secteurs (22, 22') se trouvant au-dessous de l'axe central horizontal (20).

7. Emmanchement à force selon une des revendications 1 - 6,
**caractérisé en ce que** l'extension du bombement (13), s'étendant symétriquement au-dessous de l'axe central horizontal (20), du tronçon (11, 11', 11") présentant une section transversale différente, ainsi que la profondeur (14) de l'évidement (12, 12', 12"), diminuent de façon continue dans la zone de transition, et le contour rectiligne (21, 21'), s'étendant de façon inclinée, des deux secteurs (19, 19') se trouvant au-dessus de l'axe central horizontal (20) s'étend de façon toujours plus escarpée, jusqu'à ce que la ligne inclinée (27.2) forme une tangente par rapport à la section transversale circulaire.
